(19)

Europäisches Patentamt
European Patent Office
Office européen des brevets

(11)  EP 4 131 498 A1

(12)  EUROPEAN PATENT APPLICATION
published in accordance with Art. 153(4) EPC

(43) Date of publication:
08.02.2023  Bulletin 2023/06

(51) International Patent Classification (IPC):
H01M 4/587 (2010.01)

(21) Application number: 20927376.2

(52) Cooperative Patent Classification (CPC):
H01M 4/587; Y02E 60/10

(22) Date of filing: 27.03.2020

(86) International application number:
PCT/CN2020/081611

(87) International publication number:
WO 2021/189408 (30.09.2021 Gazette 2021/39)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Ningde Amperex Technology Limited
Ningde, Fujian 352100 (CN)

(72) Inventors:
• DU, Peng
  Ningde, Fujian 352100 (CN)
• XIE, Yuansen
  Ningde, Fujian 352100 (CN)

(74) Representative: Icosa
83 avenue Denfert-Rochereau
75014 Paris (FR)

(54)  **NEGATIVE ELECTRODE ACTIVE MATERIAL, ELECTROCHEMICAL DEVICE USING SAME, AND ELECTRONIC DEVICE**

(57)  This application relates to a negative electrode active material, an electrochemical apparatus using the negative electrode active material, and an electronic apparatus. Specifically, this application provides a negative electrode active material, where an interplanar spacing of the negative electrode active material is 0.35 nm to 0.45 nm, the negative electrode active material includes a metal element, the metal element includes at least one of gold, silver, platinum, zirconium, zinc, magnesium, calcium, barium, vanadium, iron, or aluminum, and a content percentage of the metal element is 20 ppm to 400 ppm based on a total weight of the negative electrode active material. The negative electrode active material in this application helps to improve energy density, cycle performance, and safety performance of the electrochemical apparatus.

FIG. 1

EP 4 131 498 A1

**Description**

**TECHNICAL FIELD**

This application relates to the field of energy storage, and in particular, to a negative electrode active material, and an electrochemical apparatus and an electronic apparatus using the same.

**BACKGROUND**

Electrochemical apparatuses (for example, lithium-ion batteries) are widely used due to their environmental friendliness, high working voltage, large specific capacity, long cycle life, and other advantages, and have become a new type of green chemical power source with the most development potential in the world today. Small-sized lithium-ion batteries are generally used as power sources for driving portable electronic communication devices (for example, camcorders, mobile phones, or notebook computers), especially high-performance portable devices. In recent years, medium-sized and large-sized lithium-ion batteries with high-output characteristics have been developed for use in electric vehicles (EV) and large-scale energy storage systems (ESS). As application fields of the lithium-ion batteries are expanded from consumer electronics to fields of hybrid and pure power, energy density, cycle performance, and safety of the lithium-ion batteries have become key technical issues to be resolved urgently. Improving active materials of electrodes is one of research directions for resolving the above issues.

In view of this, it is necessary to provide an improved negative electrode active material, and an electrochemical apparatus and an electronic apparatus using the same.

**SUMMARY**

This application provides a negative electrode active material, and an electrochemical apparatus and an electronic apparatus using the same, in an attempt to resolve at least one problem present in the related art to at least some extent.

According to an aspect of this application, this application provides a negative electrode active material, where an interplanar spacing of the negative electrode active material is 0.35 nm to 0.45 nm, the negative electrode active material includes a metal element, the metal element includes at least one of gold, silver, platinum, zirconium, zinc, magnesium, calcium, barium, vanadium, iron, or aluminum, and a content percentage of the metal element is 20 ppm to 400 ppm based on a total weight of the negative electrode active material. In some embodiments, the interplanar spacing of the negative electrode active material is 0.35 nm to 0.40 nm. In some embodiments, the content percentage of the metal element is 50 ppm to 300 ppm based on the total weight of the negative electrode active material. In some embodiments, the content percentage of the metal element is 100 ppm to 200 ppm based on the total weight of the negative electrode active material. In some embodiments, the content percentage of the metal element is 20 ppm, 50 ppm, 80 ppm, 100 ppm, 150 ppm, 200 ppm, 250 ppm, 300 ppm, 350 ppm, or 400 ppm based on the total weight of the negative electrode active material.

According to the embodiments of this application, the negative electrode active material further includes a non-metal element, where the non-metal element includes at least one of phosphorus, boron, silicon, arsenic, or selenium, and a content percentage of the non-metal element is 50 ppm to 300 ppm based on the total weight of the negative electrode active material. In some embodiments, the content percentage of the non-metal element is 100 ppm to 150 ppm based on the total weight of the negative electrode active material. In some embodiments, the content percentage of the non-metal element is 50 ppm, 60 ppm, 70 ppm, 80 ppm, 90 ppm, 100 ppm, 110 ppm, 120 ppm, 130 ppm, 140 ppm, 150 ppm, 160 ppm, 170 ppm, 180 ppm, 190 ppm, 200 ppm, 210 ppm, 230 ppm, 260 ppm, 280 ppm, or 300 ppm based on the total weight of the negative electrode active material.

According to the embodiments of this application, a ratio Id/Ig, measured using the Raman spectroscopy, of a peak width at half height Id of a peak at 1345 $cm^{-1}$ to 1355 $cm^{-1}$ of the negative electrode active material to a peak width at half height Ig of a peak at 1595 $cm^{-1}$ to 1605 $cm^{-1}$ is 0.7 to 1.5. In some embodiments, Id/Ig of the negative electrode active material measured by using the Raman spectroscopy is 1.0 to 1.2. In some embodiments, Id/Ig of the negative electrode active material measured by using the Raman spectroscopy is 0.7, 0.8, 0.9, 1.0, 1.1, 1.2, 1.3, 1.4, or 1.5.

According to the embodiments of this application, the negative electrode active material includes pore passages, where the pore passages are in a surface of the negative electrode active material, inside the negative electrode active material, or running through the negative electrode active material, or come in any combination thereof, the pore passages account for no more than 50% of a total volume of the negative electrode active material, and inner walls of the pore passages contain the metal material.

According to the embodiments of this application, the negative electrode active material includes pore passages, where the pore passages are in a surface of the negative electrode active material, inside the negative electrode active material, or running through the negative electrode active material, or come in any combination thereof, the pore passages account for no more than 50% of a total volume of the negative electrode active material, and inner walls of the pore passages contain the non-metal material.

In some embodiments, the pore passages account for no more than 40% of the total volume of the negative electrode active material. In some embodiments, the pore passages account for no more than 30% of the total volume of the negative electrode active material. In some embodiments, the pore passages account for no more than 20% of the total volume of the negative electrode active material. In some embodiments, the pore passages account for 5%, 10%, 15%, 20%, 25%, 30%, 35%, or 40% of the total volume of the negative electrode active material.

According to the embodiments of this application, a specific surface area of the negative electrode active material is 2 $m^2/g$ to 50 $m^2/g$. In some embodiments, the specific surface area of the negative electrode active material is 5 $m^2/g$ to 40 $m^2/g$. In some embodiments, the specific surface area of the negative electrode active material is 8 $m^2/g$ to 40 $m^2/g$. In some embodiments, the specific surface area of the negative electrode active material is 10 $m^2/g$ to 35 $m^2/g$. In some embodiments, the specific surface area of the negative electrode active material is 30 $m^2/g$ to 40 $m^2/g$. In some embodiments, the specific surface area of the negative electrode active material is 2 $m^2/g$, 5 $m^2/g$, 8 $m^2/g$, 10 $m^2/g$, 12 $m^2/g$, 16 $m^2/g$, 18 $m^2/g$, 20 $m^2/g$, 22 $m^2/g$, 24 $m^2/g$, 28$m^2/g$, 35 $m^2/g$, 45 $m^2/g$, or 50 $m^2/g$.

According to another aspect of this application, this application provides an electrochemical apparatus, including a positive electrode, an electrolyte solution, and a negative electrode, where the positive electrode includes a positive electrode active material layer and a positive electrode current collector, the negative electrode includes a negative electrode active material layer and a negative electrode current collector, and the negative electrode active material layer includes the negative electrode active material according to this application.

According to the embodiments of this application, a porosity of the negative electrode active material layer is 15% to 45%. In some embodiments, the porosity of the negative electrode active material layer is 20% to 40%. In some embodiments, the porosity of the negative electrode active material layer is 25% to 30%. In some embodiments, the porosity of the negative electrode active material layer is 15%, 20%, 25%, 30%, 35%, 40%, or 45%.

According to the embodiments of this application, a cohesive strength of the negative electrode active material is 5 N/m to 100 N/m. In some embodiments, the cohesive strength of the negative electrode active material is 10 N/m to 80 N/m. In some embodiments, the cohesive strength of the negative electrode active material is 20 N/m to 60 N/m. In some embodiments, the cohesive strength of the negative electrode active material is 30 N/m to 50 N/m. In some embodiments, the cohesive strength of the negative electrode active material is 10 N/m, 15 N/m, 20 N/m, 25 N/m, 30 N/m, 35 N/m, 40 N/m, 45 N/m, 50 N/m, 55 N/m, 60 N/m, 65 N/m, 70 N/m, 75 N/m, or 80 N/m.

According to the embodiments of this application, a peel strength between the negative electrode active material layer and the negative electrode current collector is 3 N/m to 40 N/m. In some embodiments, the peel strength between the negative electrode active material layer and the negative electrode current collector is 5 N/m to 30 N/m. In some embodiments, the peel strength between the negative electrode active material layer and the negative electrode current collector is 10 N/m to 20 N/m. In some embodiments, the peel strength between the negative electrode active material layer and the negative electrode current collector is 3 N/m, 5 N/m, 10 N/m, 15 N/m, 20 N/m, 25 N/m, 30 N/m, 35 N/m, or 40 N/m.

According to the embodiments of this application, a weight of the positive electrode active material layer is 1.5 to 15 times the weight of the negative electrode active material layer. In some embodiments, the weight of the positive electrode active material layer is 3 to 10 times the weight of the negative electrode active material layer. In some embodiments, the weight of the positive electrode active material layer is 5 to 8 times the weight of the negative electrode active material layer. In some embodiments, the weight of the positive electrode active material layer is 1.5 times, 2 times, 3 times, 4 times, 5 times, 6 times, 7 times, 8 times, 9 times, 10 times, 11 times, 12 times, 13 times, 14 times, or 15 times the weight of the negative electrode active material layer.

According to the embodiments of this application, a capacity of the negative electrode active material is 300 mAh/g to 1200 mAh/g. In some embodiments, the capacity of the negative electrode active material is 500 mAh/g to 1000 mAh/g. In some embodiments, the capacity of the negative electrode active material is 600 mAh/g to 800 mAh/g. In some embodiments, the capacity of the negative electrode active material is 300 mAh/g, 400 mAh/g, 500 mAh/g, 600 mAh/g, 700 mAh/g, 800 mAh/g, 900 mAh/g, 1000 mAh/g, 1100 mAh/g, or 1200 mAh/g.

According to still another aspect of this application, this application provides an electronic apparatus, including the electrochemical apparatus according to this application.

Additional aspects and advantages of this application are partially described and presented in the later description, or explained through implementation of the embodiments of this application.

## BRIEF DESCRIPTION OF DRAWINGS

Drawings necessary for describing the embodiments of this application or the prior art are briefly described below, to help describe the embodiments of this application. It is obvious that the drawings described below are only some of the embodiments of this application. Those skilled in the art may still obtain drawings of other embodiments based on the structures illustrated in these drawings without creative work.

FIG. 1 is a scanning electron microscope (SEM) image of a negative electrode active material with run-through pore passages.

FIG. 2 is a scanning electron microscope (SEM) image of a negative electrode active material with pore passages inside.

FIG. 3 is a scanning electron microscope (SEM) image of a negative electrode active material with pore passages in a surface.

## DESCRIPTION OF EMBODIMENTS

Embodiments of this application are described in detail below. In the specification of this application, the same or similar components and components with the same or similar functions are indicated by similar reference signs. The embodiments related to the accompanying drawings described herein are illustrative and diagrammatic, and are used to provide a basic understanding of this application. The embodiments of this application shall not be construed as a limitation on this application.

In descriptions of the embodiments and claims, a list of items preceded by the term "at least one of" may mean any combination of the listed items. For example, if items A and B are listed, the phrase "at least one of A and B" means only A; only B; or A and B. In another example, if items A, B, and C are listed, the phrase "at least one of A, B, and C" means only A; only B; only C; A and B (exclusive of C); A and C (exclusive of B); B and C (exclusive of A); or all of A, B, and C. The item A may contain one element or a plurality of elements. The item B may contain one element or a plurality of elements. The item C may contain one element or a plurality of elements.

As used herein, "pore passage" is a channel or hole structure within individual particles of the negative electrode active material.

As used herein, the pore in the concept "porosity" refers to a void between a plurality of particles of the negative electrode active material.

To improve energy density, cycle performance, and safety performance of an electrochemical apparatus (for example, a lithium-ion battery), improving an active material of an electrode is one of research directions. An upper limit of a theoretical electrochemical capacity of a graphitized negative electrode active material is 372 mAh/g which is difficult for known graphitized negative electrode active materials to exceed. Silicon negative electrode active materials have a high electrochemical capacity. With an increase in a content percentage of doped materials in the silicon negative electrode active materials, energy density of an electrochemical apparatus can be significantly improved. However, volume swelling of the negative electrode active materials is significant. This significantly decreases performance, especially a capacity retention rate after long-time cycling, of the electrochemical apparatus.

To resolve these problems, this application provides a negative electrode active material, where an interplanar spacing of the negative electrode active material is 0.35 nm to 0.45 nm, the negative electrode active material includes a metal element, the metal element includes at least one of gold, silver, platinum, zirconium, zinc, magnesium, calcium, barium, vanadium, iron, or aluminum, and a content percentage of the metal element is 20 ppm to 400 ppm based on a total weight of the negative electrode active material. The pore passages may be formed by washing the metal element in the negative electrode active material with aqua regia. A part of the metal element can be retained in the negative electrode active material by adjusting a ratio of the aqua regia to the metal element and mixed reaction time thereof. The content percentage of the metal element in the negative electrode active material falling within the above range helps to improve cycle performance and safety of the electrochemical apparatus.

The interplanar spacing of the negative electrode active material may be obtained through an X-ray diffraction spectroscopy test: An X-ray diffraction tester (for example, X'Pert Pro) is used to perform the test according to *Graphite Negative Electrode Materials for Lithium-ion Battery* (the GB/T 24533-2009 standard), and the interplanar spacing d is calculated using the Bragg formula: $2d\sin\theta = n\lambda$, where $\lambda$ represents a wavelength of an X-ray and $\theta$ represents a half-angle of diffraction.

In some embodiments, the interplanar spacing of the negative electrode active material is 0.35 nm to 0.40 nm.

In some embodiments, the content percentage of the metal element is 50 ppm to 300 ppm based on the total weight of the negative electrode active material. In some embodiments, the content percentage of the metal element is 100 ppm to 200 ppm based on the total weight of the negative electrode active material. In some embodiments, the content percentage of the metal element is 20 ppm, 50 ppm, 80 ppm, 100 ppm, 150 ppm, 200 ppm, 250 ppm, 300 ppm, 350 ppm, or 400 ppm.

According to the embodiments of this application, the negative electrode active material further includes a non-metal element, where the non-metal element includes at least one of phosphorus, boron, silicon, arsenic, or selenium, and a content percentage of the non-metal element is 50 ppm to 200 ppm based on the total weight of the negative electrode active material. In some embodiments, the content percentage of the non-metal element is 100 ppm to 150 ppm based on the total weight of the negative electrode active material. In some embodiments, the content percentage of the non-metal element is 50 ppm, 60 ppm, 70 ppm, 80 ppm, 90 ppm, 100 ppm, 110 ppm, 120 ppm, 130 ppm, 140 ppm, 150 ppm, 160 ppm, 170 ppm, 180 ppm, 190 ppm, or 200 ppm based on the total weight of the negative electrode active material.

According to the embodiments of this application, a ratio Id/Ig, measured using the Raman spectroscopy, of a peak width at half height Id of a peak at 1345 $cm^{-1}$ to 1355 $cm^{-1}$ of the negative electrode active material to a peak width at half height Ig of a peak at 1595 $cm^{-1}$ to 1605 $cm^{-1}$ is 0.7 to 1.5. In some embodiments, Id/Ig of the negative electrode active material measured by using the Raman spectroscopy is 1.0 to 1.2. In some embodiments, Id/Ig of the negative electrode active material measured by using the Raman spectroscopy is 0.7, 0.8, 0.9, 1.0, 1.1, 1.2, 1.3, 1.4, or 1.5. When the Id/Ig of the negative electrode active material falls within the above ranges, the negative electrode active material has more crystal defects on its surface, and a higher degree of disorder.

According to the embodiments of this application, the negative electrode active material includes pore passages, and inner walls of the pore passages include the metal material. When the inner walls of the pore passages include the metal element, the metal element is close to a lithium-ion insertion site, and is easy to form an alloy compound with lithium, thereby increasing electrochemical activity of lithium without forming a lithium dendrite.

According to the embodiments of this application, the negative electrode active material includes pore passages, and inner walls of the pore passages include the non-metal material.

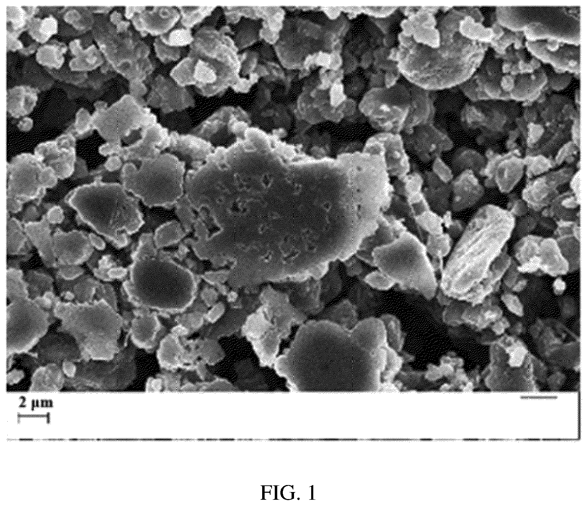

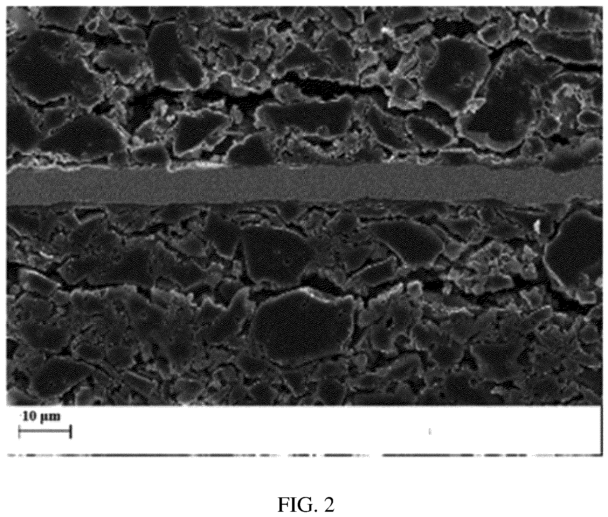

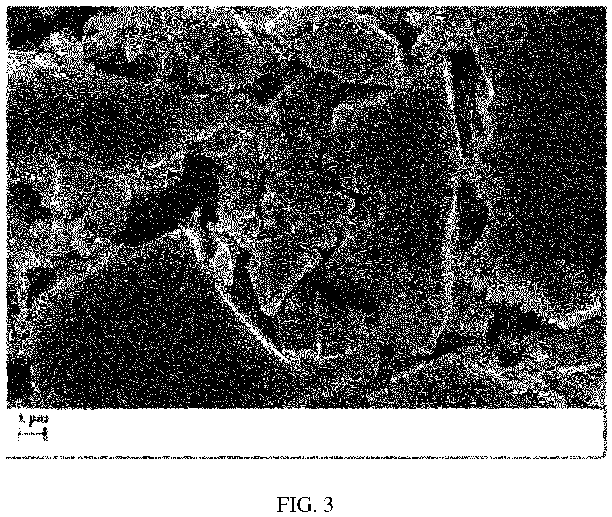

According to the embodiments of this application, the pore passages are in a surface of the negative electrode active material (as shown in FIG. 3), inside the negative electrode active material (as shown in FIG. 2), or running through the negative electrode active material (as shown in FIG. 1), or come in any combination thereof. Different forms of holes (for example, in the surface of the negative electrode active material, inside the negative electrode active material, and/or running through the negative electrode active material) have little effect on an electrochemical capacity of the negative electrode active material. If the negative electrode active material with the pore passages has a larger specific surface area, the inner walls of the pore passages can effectively adsorb lithium, thereby helping to increase the electrochemical capacity of the negative electrode active material.

According to the embodiments of this application, the pore passages account for no more than 50% of the total volume of the negative electrode active material. In some embodiments, the pore passages account for no more than 40% of the total volume of the negative electrode active material. In some embodiments, the pore passages account for no more than 30% of the total volume of the negative electrode active material. In some embodiments, the pore passages account for no more than 20% of the total volume of the negative electrode active material. In some embodiments, the pore passages account for 5%, 10%, 15%, 20%, 25%, 30%, 35%, or 40% of the total volume of the negative electrode active material. A volume of the pore passages in the negative electrode active material may be reached by controlling reaction time, a reaction temperature, an amount of added raw materials, a pH value of a first solution, and a molar ratio of aqua regia to a metal oxide.

According to the embodiments of this application, a specific surface area of the negative electrode active material is 20 $m^2/g$ to 50 $m^2/g$. In some embodiments, the specific surface area of the negative electrode active material is 30 $m^2/g$ to 40 $m^2/g$. In some embodiments, the specific surface area of the negative electrode active material is 20 $m^2/g$, 25 $m^2/g$, 30 $m^2/g$, 35 $m^2/g$, 40 $m^2/g$, 45 $m^2/g$, or 50 $m^2/g$. The existence of the pore passages can significantly increase the specific surface area of the negative electrode active material, thereby increasing contact sites between the negative electrode active material and the electrolyte solution. The specific surface area of the negative electrode active material may be obtained by using the nitrogen adsorption test method: According to the GB/T 19587-2017 standard, the Tristar II 3020M device was used for test: A mixture of helium and nitrogen (helium: nitrogen=4: 1, with helium being a carrier gas, and nitrogen being an adsorbed gas) was made flow through a tested sample to accurately measure the nitrogen ratio change before and after the test through adsorption of nitrogen at the liquid nitrogen temperature and the desorption in the liquid nitrogen desorption environment. The solid standard reference method was used as an analysis model of the test software to calculate the specific surface area of the sample.

According to the embodiments of this application, a cohesive strength of the negative electrode active material is 5 N/m to 100 N/m. In some embodiments, the cohesive strength of the negative electrode active material is 10 N/m to 80 N/m. In some embodiments, the cohesive strength of the negative electrode active material is 20 N/m to 60 N/m. In some embodiments, the cohesive strength of the negative electrode active material is 30 N/m to 50 N/m. In some embodiments, the cohesive strength of the negative electrode active material is 10 N/m, 15 N/m, 20 N/m, 25 N/m, 30 N/m, 35 N/m, 40 N/m, 45 N/m, 50 N/m, 55 N/m, 60 N/m, 65 N/m, 70 N/m, 75 N/m, or 80 N/m. The existence of the pore passages reduces contact sites between the active material and a binder, thereby reducing the cohesive strength of the negative electrode active material. When the cohesive strength of the negative electrode active material falls within the above ranges, particles of the negative electrode active material have proper cohesiveness. This not only avoids powder falling in roll-in and winding processes and formation of a micro-short circuit site inside a battery cell, thereby avoiding a potential safety hazard, but also avoids volume swelling of the negative electrode active material in a charge and discharge process and incomplete lithiation, thereby ensuring the capacity of the electrochemical apparatus.

The cohesive strength of the negative electrode active material may be tested with an Instron (model 33652) tester: A tab (with a width of 30 mm and a length of 100 mm to 160 mm) was taken, and fixed to a steel plate by using a double-sided adhesive tape (model: 3M9448A, with a width of 20 mm and a length of 90 mm to 150 mm). The adhesive tape was stuck on the surface of the negative electrode active material layer, with one side of the adhesive tape connected to a paper tape of an equal width. A limiting block of a tensile machine was adjusted to an appropriate position, and the paper tape was folded and slipped upward by 40 mm at a slip rate of 50 mm/min to test the cohesive strength between particles in the negative electrode active material layer at 180° (that is, stretched in an opposite direction).

According to the embodiments of this application, a capacity of the negative electrode active material is 300 mAh/g to 1200 mAh/g. In some embodiments, the capacity of the negative electrode active material is 500 mAh/g to 1000 mAh/g. In some embodiments, the capacity of the negative electrode active material is 600 mAh/g to 800 mAh/g. In some embodiments, the capacity of the negative electrode active material is 300 mAh/g, 400 mAh/g, 500 mAh/g, 600 mAh/g, 700 mAh/g, 800 mAh/g, 900 mAh/g, 1000 mAh/g, 1100 mAh/g, or 1200 mAh/g.

In some implementations, the negative electrode active material may include, but is not limited to, natural graphite, artificial graphite, a mesocarbon microbead (MCMB for short), hard carbon, soft carbon, silicon, a silicon-carbon composite, a Li-Sn alloy, a Li-Sn-O alloy, Sn, SnO, $SnO_2$, spinel structure lithiated $TiO_2$-$Li_4Ti_5O_{12}$, or a LI-1 alloy. Non-limiting examples of the carbon material include crystalline carbon, amorphous carbon, and a mixture thereof. The crystalline carbon may be amorphous, plate-shaped, flake-shaped, spherical, or fiber-shaped natural graphite, or artificial graphite. The amorphous carbon may be soft carbon, hard carbon, a mesophase pitch carbonization product, burnt coke, or the like.

Negative electrode

The negative electrode includes a negative electrode current collector and a negative electrode active material layer. The negative electrode active material layer is disposed on the negative electrode current collector. The negative electrode active material layer includes the negative electrode active material according to this application.

The negative electrode current collector used in this application may be selected from copper foil, nickel foil, stainless steel foil, titanium foil, nickel foam, copper foam, a polymer substrate coated with a conductive metal, or a combination thereof.

According to the embodiments of this application, a porosity of the negative electrode active material layer is 15% to 45%. In some embodiments, the porosity of the negative electrode active material layer is 20% to 40%. In some embodiments, the porosity of the negative electrode active material layer is 25% to 30%. In some embodiments, the porosity of the negative electrode active material layer is 15%, 20%, 25%, 30%, 35%, 40%, or 45%. The porosity of the negative electrode active material layer may be reached by controlling a roll-in pressure during preparation of the negative electrode. By controlling the roll-in pressure, continuous changes in a thickness of the negative electrode active material layer can be achieved, so that the porosity of the negative electrode active material layer can be controlled. Specifically, according to *Iron Ores-Determination of Apparent Density, True Density and Porosity* (the GB/T 24586-2009 standard), an AccuPyc II 1340 tester may be used to calculate the porosity of the negative electrode active material layer by using the mass/volume method. The porosity of the negative electrode active material layer falling within the above ranges helps to improve the energy density of the electrochemical apparatus.

According to the embodiments of this application, a peel strength between the negative electrode active material layer and the negative electrode current collector is 3 N/m to 40 N/m. In some embodiments, the peel strength between the negative electrode active material layer and the negative electrode current collector is 5 N/m to 30 N/m. In some embodiments, the peel strength between the negative electrode active material layer and the negative electrode current collector is 10 N/m to 20 N/m. In some embodiments, the peel strength between the negative electrode active material layer and the negative electrode current collector is 3 N/m, 5 N/m, 10 N/m, 15 N/m, 20 N/m, 25 N/m, 30 N/m, 35 N/m, or 40 N/m. When the peel strength between the negative electrode active material layer and the negative electrode current collector falls within the above ranges, the negative electrode active material layer and the negative electrode current collector have proper adhesiveness, thereby avoiding film stripping and burr generation in the roll-in or slitting process, so as to avoid potential safety hazards, and ensuring that internal resistance of a battery cell falls within an acceptable range, so as to ensure dynamic performance and cycle performance of the electrochemical apparatus.

The peel strength between the negative electrode active material layer and the negative electrode current collector may be reached by controlling the roll-in process during preparation of the negative electrode. Specifically, the peel strength between the negative electrode active material layer and the negative electrode current collector may be tested by using an Instron (model: 33652) tester: A tab (with a width of 30 mm and a length of 100 mm to 160 mm) was taken, and fixed to a steel plate by using a double-sided adhesive tape (model: 3M9448A, with a width of 20 mm and a length of 90 mm to 150 mm). The adhesive tape was stuck on the surface of the negative electrode active material layer, with one side of the adhesive tape connected to a paper tape of an equal width. A limiting block of a tensile machine was adjusted to an appropriate position, and the paper tape was folded and slipped upward by 40 mm at a slip rate of 50 mm/min to test the peel strength between the negative electrode active material layer and the negative electrode current collector at 180° (that is, stretched in an opposite direction).

According to the embodiments of this application, the negative electrode further includes a conductive layer. In some implementations, a conductive material of the conductive layer may include any conductive material that causes no chemical change. Non-limiting examples of the conductive material include a carbon-based material (for example, natural graphite, artificial graphite, carbon black, acetylene black, Ketjen black, carbon fiber, a carbon nanotube, or graphene), a metal-based material (for example, metal powder and metal fiber, for example, copper, nickel, aluminum, and silver), a conductive polymer (for example, a polyphenylene derivative), and a mixture thereof.

According to the embodiments of this application, the negative electrode further includes a binder. The binder is selected from at least one of polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(vinylidene fluoride), polyethylene, polypropylene, styrene-butadiene rubber, acrylic styrene-butadiene rubber, epoxy resin, nylon, or the like.

Positive electrode

The positive electrode includes a positive electrode current collector and a positive electrode active material disposed on the positive electrode current collector. Specific types of the positive electrode active material are not subject to specific restrictions, and can be selected as required.

In some implementations, the positive electrode active material includes a positive electrode material capable of absorbing and releasing lithium (Li). Examples of the positive electrode material capable of absorbing/releasing lithium (Li) may include lithium cobalt oxide, lithium nickel cobalt manganese oxide, lithium nickel cobalt aluminium oxide, lithium manganate, lithium iron manganese phosphate, lithium vanadium phosphate, lithium vanadyl phosphate, lithium iron phosphate, lithium titanate, and a lithium-rich manganese-based material.

Specifically, the chemical formula of the lithium cobalt oxide may be the chemical formula 1:

$$Li_xCo_aMl_bC_{2-c} \qquad \text{Chemical formula 1.}$$

where M1 is selected from at least one of nickel (Ni), manganese (Mn), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), tungsten (W), yttrium (Y), lanthanum (La), zirconium (Zr), and silicon (Si), and values of x, a, b, and c fall within the following ranges respectively: $0.8 \leq x \leq 1.2$, $0.8 \leq a \leq 1$, $0 \leq b \leq 0.2$, and $-0.1 \leq c \leq 0.2$.

The chemical formula of the lithium nickel cobalt manganese oxide or lithium nickel cobalt aluminium oxide may be the chemical formula 2:

$$Li_yNi_dM_{2e}O_{2-f} \qquad \text{Chemical formula 2,}$$

where M2 is selected from at least one of cobalt (Co), manganese (Mn), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), tungsten (W), zirconium (Zr), and silicon (Si), and values of y, d, e, and f fall within the following ranges respectively: $0.8 \leq y \leq 1.2$, $0.3 \leq d \leq 0.98$, $0.02 \leq e \leq 0.7$, and $-0.1 \leq f \leq 0.2$.

The chemical formula of the lithium manganate may be the chemical formula 3:

$$Li_zMn_{2-g}M3_gO_{4-h} \qquad \text{Chemical formula 3,}$$

where M3 is selected from at least one of cobalt (Co), nickel (Ni), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), and tungsten (W), and values of z, g, and h fall within the following ranges respectively: $0.8 \leq z \leq 1.2$, $0 \leq g < 1.0$, and $-0.2 \leq h \leq 0.2$.

In some embodiments, the weight of the positive electrode active material layer is 1.5 to 15 times the weight of the negative electrode active material layer. In some embodiments, the weight of the positive electrode active material layer is 1.9 to 10 times the weight of the negative electrode active material layer. In some embodiments, the weight of the positive electrode active material layer is 5 to 8 times the weight of the negative electrode active material layer. In some embodiments, the weight of the positive electrode active material layer is 1.5 times, 1.8 times, 1.9 times, 2 times, 3 times, 4 times, 5 times, 6 times, 7 times, 8 times, 9 times, 10 times, 11 times, 12 times, 13 times, 14 times, or 15 times the weight of the negative electrode active material layer.

In some embodiments, the positive electrode active material layer may have a coating on its surface, or may be mixed with another compound having a coating. The coating may include at least one compound of a coating element selected from oxides of the coating element, hydroxides of the coating element, hydroxyl oxides of the coating element, oxycarbonate (oxycarbonate) of the coating element, and hydroxycarbonate (hydroxycarbonate) of the coating element. The compound used for coating may be amorphous or crystalline. The coating element contained in the coating may include Mg, Al, Co, K, Na, Ca, Si, Ti, V, Sn, Ge, Ga, B, As, Zr, F, or a mixture thereof. The coating can be applied by using any method as long as the method does not adversely affect the performance of the positive electrode active material. For example, the method may include any coating method known to persons of ordinary skill in the art, for example, spraying and dipping.

In some implementations, the positive electrode active material layer further includes a binder, and optionally, further includes a positive electrode conductive material.

The binder can enhance binding between particles of the positive electrode active material, and binding between the positive electrode active material and the current collector. Non-limiting examples of the binder include polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(vinylidene fluoride), polyethylene, polypropylene, styrene-butadiene rubber, acrylic styrene-butadiene rubber, epoxy resin, nylon, and the like.

The positive electrode active material layer includes a positive electrode conductive material, so that the electrode is able to conduct electricity. The positive electrode conductive material may include any conductive material that causes no chemical change. Non-limiting examples of the positive electrode conductive material include a carbon-based material (for example, natural graphite, artificial graphite, carbon black, acetylene black, Ketjen black, and carbon fiber), a metal-based material (for example, metal powder and metal fiber, including copper, nickel, aluminum, and silver), a conductive polymer (for example, a polyphenylene derivative), and a mixture thereof.

The positive electrode current collector used in the electrochemical apparatus according to this application may be aluminum (Al), but is not limited thereto.

Electrolyte solution

The electrolyte solution that can be used in the embodiments of this application may be an electrolyte solution known in the prior art.

An electrolyte that can be used in the electrolyte solution of the embodiments of this application includes, but is not limited to, an inorganic lithium salt such as $LiClO_4$, $LiAsF_6$, $LiPF_6$, $LiBF_4$, $LiSbF_6$, $LiSO_3F$, and $LiN(FSO_2)_2$; a fluorine-containing organic lithium salt such as $LiCF_3SO_3$, $LiN(FSO_2)(CF_3SO_2)$, $LiN(CF_3SO_2)_2$, $LiN(C_2F_5SO_2)_2$, a cyclic 1,3-hexafluoropropane disulfonimide lithium salt, a cyclic 1,2-tetrafluoroethane disulfonimide lithium salt, $LiN(CF_3SO_2)(C_4F_9SO_2)$, $LiC(CF_3SO_2)_3$, $LiPF_4(CF_3)_2$, $LiPF_4(C_2F_5)_2$, $LiPF_4(CF_3SO_2)_2$, $LiPF_4(C_2F_5SO_2)_2$, $LiBF_2(CF_3)_2$, $LiBF_2(C_2F_5)_2$, $LiBF_2(CF_3SO_2)_2$, and $LiBF_2(C_2F_5SO_2)_2$; and a dicarboxylic acid complex-containing lithium salt such as lithium bis(oxalate)borate, lithium difluoro oxalato phosphate, lithium tris(oxalate) phosphate, lithium difluoro bis(oxalate)phosphate, and lithium tetrafluoro oxalato phosphate. In addition, the above electrolyte may be used alone, or two or more electrolytes may be used together. In some embodiments, the electrolyte includes a combination of $LiPF_6$ and $LiBF_4$. In some embodiments, the electrolyte includes a combination of an inorganic lithium salt such as $LiPF_6$ or $LiBF_4$ and a fluorine-containing organic lithium salt such as $LiCF_3SO_3$, $LiN(CF_3SO_2)_2$, or $LiN(C_2F_5SO_2)_2$. In some embodiments, the electrolyte includes $LiPF_6$.

In some embodiments, a concentration of the electrolyte ranges from 0.8 mol/L to 3 mol/L. For example, the concentration ranges from 0.8 mol/L to 2.5 mol/L, 0.8 mol/L to 2 mol/L, or 1 mol/L to 2 mol/L. For another example, the concentration is 1 mol/L, 1.15 mol/L, 1.2 mol/L, 1.5 mol/L, 2 mol/L, or 2.5 mol/L.

A solvent that can be used in the electrolyte solution of the embodiments of this application includes, but is not limited to, a carbonate compound, an ester-based compound, an ether-based compound, a ketone-based compound, an alcohol-based compound, an aprotic solvent, or a combination thereof.

An example of the carbonate compound includes, but is not limited to, a linear carbonate compound, a cyclic carbonate compound, a fluorocarbonate compound, or a combination thereof.

Examples of the linear carbonate compound include, but are not limited to, diethyl carbonate (DEC), dimethyl carbonate (DMC), dipropyl carbonate (DPC), methyl propyl carbonate (MPC), ethylene propyl carbonate (EPC), ethyl methyl carbonate (MEC), and a combination thereof. Examples of the cyclic carbonate compound are ethylene carbonate (EC), propylene carbonate (PC), butylene carbonate (BC), vinyl ethylene carbonate (VEC), and a combination thereof. Examples of the fluorocarbonate compound are fluoroethylene carbonate (FEC), 4,5-difluoro-1,3-dioxolan-2-one, 4,4-difluoro-1,3-dioxolan-2-one, 4,4,5-trifluoro-1,3-dioxolan-2-one, 4,4,5,5-tetrafluoro-1,3-dioxolan-2-one, 4-fluoro-5-methyl-1,3-dioxolan-2-one, 4-fluoro-4-methyl-1,3-dioxolan-2-one, 4,5-difluoro-4-methyl-1,3-dioxolan-2-one, 4,4,5-trifluoro-5-methyl-1,3-dioxolan-2-one, 4-(trifluoromethyl)-1,3-dioxolan-2-one, and a combination thereof.

Examples of the ester-based compound include but are not limited to methyl acetate, ethyl acetate, n-propyl acetate, tert-butyl acetate, methyl propionate, ethyl propionate, γ-butyrolactone ester, caprolactone, valerolactone, mevalonolactone, caprolactone, methyl formate, and a combination thereof.

Examples of the ether-based compound include but are not limited to dibutyl ether, tetraglyme, diglyme, 1,2-dimethoxyethane, 1,2-diethoxyethane, ethoxymethoxyethane, 2-methyltetrahydrofuran, tetrahydrofuran, and a combination thereof.

An example of the ketone-based compound includes, but is not limited to, cyclohexanone.

Examples of the alcohol-based compounds include, but are not limited to, ethanol and isopropanol.

Examples of the aprotic solvent include, but are not limited to, dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, nitromethane, trimethyl phosphate, triethyl phosphate, trioctyl phosphate, phosphate ester, and a combination thereof.

Separator

In some implementations, a separator is provided between the positive electrode and the negative electrode to prevent a short circuit. The material and shape of the separator that can be used in the embodiments of this application are not particularly limited, and may be any technology disclosed in the prior art. In some implementations, the separator includes a polymer or an inorganic substance formed by a material stable to the electrolyte solution of this application.

For example, the separator may include a substrate layer and a surface treatment layer. The substrate layer is a non-woven fabric, a membrane, or a composite membrane having a porous structure, and a material of the substrate layer is selected from at least one of polyethylene, polypropylene, polyethylene terephthalate, and polyimide. Specifically, a polypropylene porous membrane, a polyethylene porous membrane, a polypropylene non-woven fabric, a polyethylene non-woven fabric or a polypropylene-polyethylene-polypropylene porous composite membrane can be selected. The porous structure can improve heat resistance, oxidation resistance, and electrolyte infiltration of the separator, and enhance adhesion between the separator and the electrode plate.

The surface treatment layer is provided on at least one surface of the substrate layer, and the surface treatment layer may be a polymer layer or an inorganic layer, or may be a layer formed by a mixed polymer and an inorganic substance.

The inorganic layer includes inorganic particles and a binder. The inorganic particles are selected from one or a combination of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, and barium sulfate. The binder is selected from a combination of one or more of polyvinylidene fluoride, a vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, and polyhexafluoropropylene.

The polymer layer contains a polymer, and a material of the polymer is selected from at least one of polyamide, polyacrylonitrile, an acrylate polymer, polyacrylic acid, polyacrylate, polyvinylpyrrolidone, polyvinyl ether, polyvinylidene fluoride, or poly(vinylidene fluoride-hexafluoropropylene).

Electrochemical apparatus

This application further provides an electrochemical apparatus, including a positive electrode, an electrolyte solution, and a negative electrode, where the positive electrode includes a positive electrode active material layer and a positive electrode current collector, the negative electrode includes a negative electrode active material layer and a negative electrode current collector, and the negative electrode active material layer includes the negative electrode active material according to this application.

The electrochemical apparatus according to this application includes any apparatus in which electrochemical reactions take place. Specific examples of this apparatus include all kinds of primary batteries, secondary batteries, fuel batteries, solar batteries, or capacitors. Especially, the electrochemical apparatus is a lithium secondary battery, including lithium metal secondary batteries, lithium-ion secondary batteries, lithium polymer secondary batteries, or lithium-ion polymer secondary batteries.

Electronic apparatus

This application further provides an electronic apparatus, including the electrochemical apparatus according to this application.

The electrochemical apparatus of this application is not particularly limited to any purpose, and may be used for any known electronic apparatus in the prior art. In some implementations, the electrochemical apparatus of this application may be used for, but is not limited to, a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, a lithium-ion capacitor, or the like.

Lithium-ion batteries are used as an example below with reference to specific examples to describe preparation of a lithium-ion battery. Those skilled in the art should understand that the preparation method described in this application is only an example, and any other suitable preparation methods fall within the scope of this application.

**Examples**

Performance evaluation is conducted below based on examples and comparative examples of the lithium-ion battery of this application.

**I. Preparation of a lithium-ion battery**

1. Preparing a negative electrode active material

2 kg of artificial graphite was dispersed in ethanol to obtain the first solution. 0.05 mol of citric acid was dissolved in 1 mL of isopropanol. After the citric acid was completely dissolved, 1.5 mol of magnesium nitrate hexahydrate was added and stirred at 1000 rpm for at least 30 minutes. The solution was filtered through a water filter membrane to obtain a magnesium oxide sol-gel solution. Nanoparticles (gold nanoparticles, silver nanoparticles, or gold-silver alloy nanoparticles) were quickly injected into the magnesium oxide sol-gel solution, and then the second solution was obtained in this step. 1000 mL of the second solution was added to the first solution, and the mixed solution was constantly stirred at 50°C for 90 minutes to obtain the third solution. Then, aqua regia was dispersed into the third solution to elute the nanoparticles (gold nanoparticles, silver nanoparticles, or gold-silver alloy nanoparticles), so as to release the space occupied by them to form pore passages in which some elements such as gold or silver remained). Drying was performed at 70°C for 10 hours to remove the solvent, and then heat treatment was performed at 1000°C under an argon atmosphere to remove impurities, thereby obtaining the negative electrode active material.

2. Preparing a negative electrode

A negative electrode active material, styrene butadiene rubber (SBR), and sodium carboxymethyl cellulose (CMC) were mixed into an appropriate amount of deionized water at a weight ratio of 97:2:1, and the mixed solution was stirred to form a uniform negative electrode slurry. The solid content of the negative electrode slurry was 54wt%. The slurry was coated on the negative electrode current collector (copper foil), and dried at 85°C. Then, after cold pressing, cutting, and slitting, drying was performed in vacuum at 120°C for 12 hours to obtain the negative electrode.

3. Preparing a positive electrode

A positive electrode active material lithium cobalt oxide ($LiCoO_2$), a conductive agent Super P, and a binder polyvinylidene fluoride (PVDF) were mixed into an appropriate amount of N-methylpyrrolidone (NMP) solvent at a weight ratio of 97:1.4:1.6, and the mixed solution was stirred to form a uniform positive electrode slurry. The solid content of the positive electrode slurry was 72wt%. The slurry was coated on the positive electrode current collector aluminum foil, and dried at 85°C. Then, after cold pressing, cutting, and slitting, drying was performed in vacuum at 85°C for 4 hours to obtain the positive electrode.

4. Preparing an electrolyte solution

In a glove box under a dry argon atmosphere, ethylene carbonate (EC), ethyl methyl carbonate (EMC), and diethyl carbonate (DEC) were mixed at a mass ratio of EC:EMC:DEC = 30:50:20. Then, 1.5% of 1,3-propane sultone and 2% of fluoroethylene carbonate were added and dissolved. After the mixed solution was thoroughly stirred, a lithium salt $LiPF_6$ was added and mixed uniformly to obtain the electrolyte solution. The concentration of $LiPF_6$ was 1 mol/L.

5. Preparing a separator

A porous polyethylene (PE) polymer film with a thickness of 7 $\mu$m was used as the separator.

6. Preparing a lithium-ion battery

The positive electrode, separator, and negative electrode were stacked in order, so that the separator was placed between the positive electrode and the negative electrode for separation. Then they were wound with tabs welded thereto and placed in an outer packaging aluminum foil film. Then the electrolyte solution was injected, followed by processes such as vacuum packaging, standing, chemical conversion, shaping, and capacity testing, to obtain a soft-packed lithium-ion battery.

**II. Test methods**

1. Method for testing a post-cycle capacity retention rate of the lithium-ion battery

The lithium-ion battery was charged at a constant current of 0.7 C to a voltage of 4.4 V in an environment of 25°C, charged at a constant voltage, and discharged at a constant current of 1 C to a voltage of 3 V. This was denoted as a cycle, and a discharge capacity at the first cycle was recorded. 200 cycles were performed, and a discharge capacity at the 200th cycle was recorded. The post-cycle capacity retention rate of the lithium-ion battery was calculated by using the following formula:

$$\text{Post-cycle capacity retention rate} = (\text{Discharge capacity at the } 200^{\text{th}}$$
$$\text{cycle/Discharge capacity at the first cycle}) \times 100\%.$$

Five samples were tested in each example or comparative example, and the average value was used.

2. Method for testing thermal shock resistance time of the lithium-ion battery

The lithium-ion battery was fully charged and placed in a high temperature box at 150°C. Duration between the placement time and the time when the lithium-ion battery caught fire was recorded as the thermal shock resistance time. Five samples were tested in each example or comparative example, and the average value was used.

3. Overcharge test method of the lithium-ion battery

The lithium-ion battery was overcharged at a current density of 1 C to 10 V, and the surface temperature of the lithium-ion battery was tested. Five samples were tested in each example or comparative example, and the average value was used.

4. Nail penetration test method of the lithium-ion battery

The lithium-ion battery was placed in a 25°C thermostat and stood for 30 minutes to bring the lithium-ion battery to a constant temperature. The lithium-ion battery that had reached a constant temperature was charged at a constant current of 0.5 C to a voltage of 4.4 V, and then charged at a constant voltage of 4.4 V to a current of 0.025 C. The fully charged lithium-ion battery was moved to the nail penetration tester, the test ambient temperature was kept at 25°C±2°C, and a steel nail with a diameter of 4 mm was driven through the center of the lithium-ion battery at a constant speed of 30 mm/s, and remained in the battery for 300 seconds. The surface temperature of the lithium-ion battery was tested. Five samples were tested in each example or comparative example, and the average value was used.

5. Impact test method of the lithium-ion battery

The lithium-ion battery was charged at a constant current of 0.5 C to a voltage of 4.3 V at 25°C,, and then charged at a constant voltage of 4.3 V to a current of 0.05 C. The UL1642 test standard was adopted to perform the impact test on the lithium-ion battery, in which a 9.8 kg hammer with a diameter of 15.8 mm was dropped from a height of 61±2.5 cm. The surface temperature of the lithium-ion battery was tested. Five samples were tested in each example or comparative example, and the average value was used.

6. Method for testing a cohesive strength of the negative electrode active material

An Instron (model: 33652) tester was used for test: A tab (with a width of 30 mm and a length of 100 mm to 160 mm) was taken, and fixed to a steel plate by using a double-sided adhesive tape (model: 3M9448A, with a width of 20 mm and a length of 90 mm to 150 mm). The adhesive tape was stuck on the surface of the negative electrode active material layer, with one side of the adhesive tape connected to a paper tape of an equal width. The limiting block of the tensile machine was adjusted to an appropriate position, and the paper tape was folded and slipped upward by 40 mm at a slip rate of 50 mm/min to test the cohesive strength between particles in the negative electrode active material layer at 180° (that is, stretched in an opposite direction).

7. Method for testing a specific surface area of the negative electrode active material

According to the GB/T 19587-2017 standard, a Tristar II 3020M device was used for test: A mixture of helium and nitrogen (helium : nitrogen=4:1, with helium being a carrier gas, and nitrogen being an adsorbed gas) was made flow through a tested sample to accurately measure the nitrogen ratio change before and after the test through adsorption of nitrogen at the liquid nitrogen temperature and the desorption in the liquid nitrogen desorption environment. The solid standard reference method was used as an analysis model of the test software to calculate the specific surface area of the sample.

8. Method for testing a peel strength between the negative electrode active material layer and the negative electrode current collector

An Instron (model: 33652) tester was used for test: A tab (with a width of 30 mm and a length of 100 mm to 160 mm) was taken, and fixed to a steel plate by using a double-sided adhesive tape (model: 3M9448A, with a width of 20 mm and a length of 90 mm to 150 mm). The adhesive tape was stuck on the surface of the negative electrode active material layer, with one side of the adhesive tape connected to a paper tape of an equal width. The limiting block of the tensile machine was adjusted to an appropriate position, and the paper tape was folded and slipped upward by 40 mm at a slip rate of 50 mm/min to test the peel strength between the negative electrode active material layer and the negative electrode current collector at 180° (that is, stretched in an opposite direction).

9. Method for testing a porosity of the negative electrode active material layer

According to *Iron Ores-Determination of Apparent Density, True Density and Porosity* (the GB/T 24586-2009 standard), an AccuPyc II 1340 tester was used to calculate the porosity by using the mass/volume method. A volume of each sample was measured from at least three different positions to obtain an average. Mass of the sample was measured through an electronic balance at least three times to obtain an average. The porosity of the negative electrode active material layer was calculated by using the following formula:

$$\text{Porosity} = m/V \times Ps \times 100\%,$$

where m was the average mass (g) obtained in the test, V was the average volume (cm$^3$) obtained in the test, and Ps was the true density of the sample (g/cm$^3$).

III. Test result

Tables 1 to 3 showed characteristics of the negative electrode active materials used in the lithium-ion batteries in the examples and comparative examples of this application and their effects on the energy density, cycle performance, and safety of the lithium-ion batteries. In Table 2, except the listed parameters, conditions of Examples 24 to 40 were the same as those of Example 15, and conditions of Example 41 were the same as those of Example 3. In Table 3, except the listed parameters, conditions of Examples 42 to 67 were the same as those of Example 15.

As shown in Table 1, the negative electrode active material used in Comparative Example 1 had an interplanar spacing of less than 0.35 nm and included no metal elements. The post-cycle capacity retention rate of the lithium-ion battery was extremely low, the thermal shock resistance time was very short, and surface temperatures in the overcharge test, nail penetration test, and impact test were very high. Consequently, the lithium-ion battery was prone to high-temperature safety hazards and therefore had poor safety performance. The negative electrode active material used in Comparative Example 2 had an interplanar spacing ranging from 0.35 nm to 0.45 nm and included no metal elements. The post-cycle capacity retention rate of the lithium-ion battery was slightly increased but still low, the thermal shock resistance time was very short, and surface temperatures in the overcharge test, nail penetration test, and impact test were very high (that is, the safety was poor). As shown in Comparative Examples 3 and 4, when the content percentage of the metal element in the negative electrode active material was less than 20 ppm or greater than 400 ppm, the post-cycle capacity retention rate of the lithium-ion battery was relatively low, the thermal shock resistance time was very short, and surface temperatures in the overcharge test, nail penetration test, and impact test were very high (that is, the safety was poor).

As shown in Examples 1 to 20, when the negative electrode active material had an interplanar spacing ranging from 0.35 nm to 0.45 nm and included 20 ppm to 400 ppm of metal elements, the post-cycle capacity retention rate of the lithium-ion battery was significantly increased, thermal shock resistance time was significantly reduced, and surface temperatures in the overcharge test, nail penetration test, and impact test were significantly reduced. That is, the lithium-ion battery had significantly improved cycle performance and safety performance. When the negative electrode active material included pore passages and inner walls of the pore passages included metal elements, the post-cycle capacity retention rate of the lithium-ion battery could be further improved, and the thermal shock resistance time of the lithium-ion battery and surface temperatures in the overcharge test, nail penetration test, and impact test could be reduced. Different types of metal elements could achieve basically equivalent effects.

In addition, when the negative electrode active material further included 50 ppm to 200 ppm of non-metal elements, the post-cycle capacity retention rate, thermal shock resistance time, and surface temperatures in the overcharge test, nail penetration test, and impact test of the lithium-ion battery could be further improved. The negative electrode active material including pore passages and inner walls of the pore passages including non-metal elements helped to further improve the cycle performance and safety performance of the lithium-ion battery. Different types of non-metal elements could achieve basically equivalent effects.

As shown in Table 2, the Id/Ig of the negative electrode active material measured by using the Raman spectroscopy ranging from 0.7 to 1.5 could further increase the post-cycle capacity retention rate of the lithium-ion battery and reduce the thermal shock resistance time and surface temperatures in the overcharge test, nail penetration test, and impact test of the lithium-ion battery. Pore passages accounting for no more than 50% of the volume of the negative electrode active material helped to further improve the cycle performance and safety performance of the lithium-ion battery. The specific surface area of the negative electrode active material ranging from 2 $m^2$/g to 50 $m^2$/g helped to further improve the cycle performance and safety performance of the lithium-ion battery.

As shown in Table 3, the following helped to further improve the cycle performance and safety performance of the lithium-ion battery: the porosity of the negative electrode active material layer ranged from 15% to 45%, the cohesive strength of the negative electrode active material ranged from 5 N/m to 100 N/m, the peel strength between the negative electrode active material layer and the negative electrode current collector ranged from 3 N/m to 40 N/m, the weight ratio of the positive electrode active material layer to the negative electrode active material layer ranged from 1.5 to 15, and the capacity of the negative electrode active material ranged from 300 mAh/g to 1200 mAh/g.

Improving the cycle performance of the lithium-ion battery while ensuring safety was helpful to expand application fields of lithium-ion batteries, and provide a broad space for development of lithium-ion batteries.

**Table 1**

| | Interplanar spacing (nm) | Metal element | | Non-metal element | | Inner walls of pore passages | | Post-cycle capacity retention rate | Thermal shock resistance time (min) | Surface temperature of the lithium-ion battery (°C) | | |
|---|---|---|---|---|---|---|---|---|---|---|---|---|
| | | Name | Content (ppm) | Name | Content (ppm) | Metal element | Non-metal element | | | Overcharge test | Nail penetration test | Impact test |
| Example 1 | 0.38 | Magnesium | 200 | -- | -- | No | No | 94.5% | 80 | 168 | 162 | 152 |
| Example 2 | 0.38 | Magnesium | 20 | -- | -- | Yes | No | 93.0% | 60 | 200 | 193 | 190 |
| Example 3 | 0.38 | Magnesium | 120 | -- | -- | Yes | No | 95.0% | 70 | 175 | 168 | 165 |
| Example 4 | 0.38 | Magnesium | 200 | -- | -- | Yes | No | 95.5% | 86 | 151 | 162 | 147 |
| Example 5 | 0.38 | Magnesium | 300 | -- | -- | Yes | No | 95.0% | 85 | 160 | 153 | 150 |
| Example 6 | 0.38 | Magnesium | 400 | -- | -- | Yes | No | 94.0% | 60 | 173 | 166 | 163 |
| Example 7 | 0.38 | Calcium | 200 | -- | -- | Yes | No | 89.3% | 90 | 135 | 135 | 108 |
| Example 8 | 0.38 | Aluminum | 200 | -- | -- | Yes | No | 86.4% | 76.5 | 144 | 137.7 | 135 |
| Example 9 | 0.38 | Iron | 200 | -- | -- | Yes | No | 84.6% | 54 | 155.7 | 149.4 | 146. |

| | Interplanar spacing (nm) | Metal element | | Non-metal element | | Inner walls of pore passages | | Post-cycle capacity retention rate | Thermal shock resistance time (min) | Surface temperature of the lithium-ion battery (°C) | | |
|---|---|---|---|---|---|---|---|---|---|---|---|---|
| | | Name | Content (ppm) | Name | Content (ppm) | Metal element | Non-metal element | | | Overcharge test | Nail penetration test | Impact test |
| | | | | | | | | | | | | 7 |
| Example 10 | 0.38 | Magnesium | 100 | Boron | 100 | Yes | Yes | 95.3% | 93 | 139.5 | 139.5 | 111.6 |
| Example 11 | 0.38 | Magnesium | 100 | Silicon | 100 | Yes | Yes | 95.5% | 54 | 180 | 173.7 | 171 |
| Example 12 | 0.38 | Magnesium | 100 | Arsenic | 100 | Yes | Yes | 94.3% | 81 | 157.5 | 151.2 | 148.5 |
| Example 13 | 0.38 | Magnesium | 100 | Phosphorus | 200 | Yes | Yes | 93.5% | 51 | 147 | 142 | 139 |
| Example 14 | 0.38 | Magnesium | 100 | Selenium | 200 | Yes | Yes | 94.9% | 88.5 | 133 | 132 | 106 |
| Example 15 | 0.38 | Magnesium | 200 | Boron | 200 | Yes | Yes | 98.5% | 110 | 148 | 149 | 121 |
| Example 16 | 0.38 | Magnesium | 200 | Silicon | 200 | Yes | Yes | 88.0% | 61 | 194 | 184 | 181 |
| Example 17 | 0.38 | Magnesium | 200 | Arsenic | 200 | Yes | Yes | 89.0% | 88 | 167 | 161 | 157 |

| | Interplanar spacing (nm) | Metal element | | Non-metal element | | Inner walls of pore passages | | Post-cycle capacity retention rate | Thermal shock resistance time (min) | Surface temperature of the lithium-ion battery (°C) | | |
| --- | --- | --- | --- | --- | --- | --- | --- | --- | --- | --- | --- | --- |
| | | Name | Content (ppm) | Name | Content (ppm) | Metal element | Non-metal element | | | Overcharge test | Nail penetration test | Impact test |
| Example 18 | 0.39 | Magnesium | 200 | Phosphorus | 200 | Yes | Yes | 87.7% | 57 | 156 | 151 | 147 |
| Example 19 | 0.40 | Magnesium | 200 | Boron | 200 | Yes | Yes | 96.2% | 114 | 147 | 154 | 127 |
| Example 20 | 0.44 | Magnesium | 200 | Boron | 200 | Yes | Yes | 93.2% | 90 | 150 | 161 | 146 |
| Example 21 | 0.38 | Magnesium | 100 | Boron | 240 | Yes | Yes | 93.4% | 89 | 144 | 140 | 119 |
| Example 22 | 0.38 | Magnesium | 100 | Boron | 290 | Yes | Yes | 90.1% | 86 | 147 | 146 | 121 |
| Example 23 | 0.38 | Magnesium | 100 | Boron | 310 | Yes | Yes | 86.3% | 80 | 185 | 197 | 189 |
| Comparative example 1 | 0.34 | -- | -- | -- | -- | -- | -- | 69.4% | 20 | 275 | 275 | 256 |
| Comparative example 2 | 0.38 | -- | -- | -- | -- | -- | -- | 83.0% | 18 | 261 | 254 | 250 |

16

| | | | Comparative example 3 | Comparative example 4 |
|---|---|---|---|---|
| Interplanar spacing (nm) | | | 0.34 | 0.46 |
| Metal element | Name | | Magnesium | Magnesium |
| | Content (ppm) | | 10 | 500 |
| Non-metal element | Name | | -- | -- |
| | Content (ppm) | | -- | -- |
| Inner walls of pore passages | Metal element | | No | No |
| | Non-metal element | | No | No |
| Post-cycle capacity retention rate | | | 77.0% | 73.0% |
| Thermal shock resistance time (min) | | | 30 | 27 |
| Surface temperature of the lithium-ion battery (°C) | Overcharge test | | 270 | 257 |
| | Nail penetration test | | 265 | 251 |
| | Impact test | | 243 | 241 |

**Table 2**

| | Id/Ig | Volume percentage of pore passages | Specific surface area of the negative electrode active material (m²/g) | Post-cycle capacity retention rate | Thermal shock resistance time (min) | Surface temperature of the lithium-ion battery (°C) | | |
|---|---|---|---|---|---|---|---|---|
| | | | | | | Overcharge test | Nail penetration test | Impact test |
| Example 15 | 1.1 | 25.0% | 25 | 98.5% | 110 | 148 | 149 | 121 |
| Example 24 | 0.6 | 25.0% | 25 | 84.2% | 45 | 210 | 205 | 190 |
| Example 25 | 0.7 | 25.0% | 25 | 93.0% | 65 | 185 | 178 | 175 |
| Example 26 | 0.9 | 25.0% | 25 | 97.0% | 105 | 160 | 153 | 149 |
| Example 27 | 1.3 | 25.0% | 25 | 96.0% | 90 | 155 | 148 | 145 |
| Example 28 | 1.5 | 25.0% | 25 | 89.0% | 81 | 168 | 161 | 158 |
| Example 29 | 1.6 | 25.0% | 25 | 87.0% | 53 | 200 | 211 | 179 |
| Example 30 | 1.1 | 8.0% | 25 | 97.5% | 100 | 141 | 142 | 187 |
| Example 31 | 1.1 | 15.0% | 25 | 98.2% | 100 | 145 | 147 | 119 |
| Example 32 | 1.1 | 10.0% | 25 | 89.2% | 90 | 167 | 165 | 133 |
| Example 33 | 1.1 | 50.0% | 25 | 91.2% | 82 | 155 | 158 | 129 |
| Example 34 | 1.1 | 70.0% | 25 | 87.2% | 80 | 195 | 170 | 167 |
| Example 35 | 1.1 | 25.0% | 1 | 90.0% | 54 | 257 | 243.7 | 259 |
| Example 36 | 1.1 | 25.0% | 2 | 92.0% | 59 | 240 | 231.6 | 228 |
| Example 37 | 1.1 | 25.0% | 15 | 97.0% | 89 | 210 | 201.6 | 198 |
| Example 38 | 1.1 | 25.0% | 37 | 96.0% | 84 | 192 | 183.6 | 180 |
| Example 39 | 1.1 | 25.0% | 50 | 91.0% | 59 | 207.6 | 199.2 | 195.6 |
| Example 40 | 1.1 | 25.0% | 51 | 80.0% | 49 | 218 | 211 | 207 |

(continued)

| | Id/Ig | Volume percentage of pore passages | Specific surface area of the negative electrode active material (m$^2$/g) | Post-cycle capacity retention rate | Thermal shock resistance time (min) | Surface temperature of the lithium-ion battery (°C) | | |
|---|---|---|---|---|---|---|---|---|
| | | | | | | Overcharge test | Nail penetration test | Impact test |
| Example 3 | 1.1 | 25.0% | 25 | 95.0% | 70 | 175 | 168 | 165 |
| Example 41 | 0.9 | 25.0% | 25 | 94.3% | 78 | 147 | 151 | 150 |

**Table 3**

| | Porosity of the negative electrode active material layer | Cohesive strength of negative electrode active material (N/m) | Peel strength between the negative electrode active material layer and the negative electrode current collector (N/m) | Weight ratio of the positive electrode active material layer to the negative electrode active material layer | Capacity of the negative electrode active material (mAh/g) | Post-cycle capacity retention rate | Thermal shock resistance time (min) | Overcharge test | Surface temperature of the lithium-ion battery (°C) Nail penetration test | Impact test |
|---|---|---|---|---|---|---|---|---|---|---|
| Example 15 | 25% | 50 | 25 | 7 | 500 | 98.5% | 110 | 148 | 149 | 121 |
| Example 42 | 10% | 50 | 25 | 7 | 500 | 87.2% | 65 | 180 | 189 | 177 |
| Example 43 | 15% | 50 | 25 | 7 | 500 | 93.0% | 75 | 170 | 163 | 160 |
| Example 44 | 35% | 50 | 25 | 7 | 500 | 97.2% | 90 | 176 | 168 | 165 |
| Example 45 | 45% | 50 | 25 | 7 | 500 | 93.0% | 76 | 190.3 | 183 | 179 |
| Example 46 | 60% | 50 | 25 | 7 | 500 | 92.1% | 70.5 | 200.7 | 210 | 219 |
| Example 47 | 25% | 2 | 25 | 7 | 500 | 90% | 57 | 227 | 257 | 231 |
| Example 48 | 25% | 5 | 25 | 7 | 500 | 94.0% | 69 | 220 | 212.3 | 209 |
| Example 49 | 25% | 20 | 25 | 7 | 500 | 96.0% | 88 | 192.5 | 184.8 | 181.5 |

| | Example 50 | Example 51 | Example 52 | Example 53 | Example 54 | Example 55 | Example 56 | Example 57 | Example 58 | Example 59 |
|---|---|---|---|---|---|---|---|---|---|---|
| Porosity of the negative electrode active material layer | 25% | 25% | 25% | 25% | 25% | 25% | 25% | 25% | 25% | 25% |
| Cohesive strength of negative electrode active material (N/m) | 70 | 100 | 150 | 50 | 50 | 50 | 50 | 50 | 50 | 50 |
| Peel strength between the negative electrode active material layer and the negative electrode current collector (N/m) | 25 | 25 | 25 | 1 | 3 | 15 | 40 | 70 | 25 | 25 |
| Weight ratio of the positive electrode active material layer to the negative electrode active material layer | 7 | 7 | 7 | 7 | 7 | 7 | 7 | 7 | 1.0 | 1.5 |
| Capacity of the negative electrode active material (mAh/g) | 500 | 500 | 500 | 500 | 500 | 500 | 500 | 500 | 500 | 500 |
| Post-cycle capacity retention rate | 95.0% | 92.0% | 87% | 82% | 89.0% | 93.0% | 94.0% | 86.7% | 91.1% | 94.0% |
| Thermal shock resistance time (min) | 89 | 84 | 65.5 | 60.5 | 80 | 87 | 76 | 59 | 61 | 70 |
| Surface temperature of the lithium-ion battery (°C) — Overcharge test | 176 | 190.3 | 232.5 | 240 | 211 | 185 | 237 | 249 | 223 | 220 |
| Surface temperature of the lithium-ion battery (°C) — Nail penetration test | 168.3 | 182.6 | 263 | 255 | 202 | 185 | 227 | 269 | 250 | 212.3 |
| Surface temperature of the lithium-ion battery (°C) — Impact test | 165 | 179 | 237 | 229 | 198 | 146 | 223 | 243 | 221 | 209 |

| | Example 60 | Example 61 | Example 62 | Example 63 | Example 64 | Example 65 | Example 66 | Example 67 |
|---|---|---|---|---|---|---|---|---|
| Porosity of the negative electrode active material layer | 25% | 25% | 25% | 25% | 25% | 25% | 25% | 25% |
| Cohesive strength of negative electrode active material (N/m) | 50 | 50 | 50 | 50 | 50 | 50 | 50 | 50 |
| Peel strength between the negative electrode active material layer and the negative electrode current collector (N/m) | 25 | 25 | 25 | 25 | 25 | 25 | 25 | 25 |
| Weight ratio of the positive electrode active material layer to the negative electrode active material layer | 3 | 13 | 15 | 30 | 7 | 7 | 7 | 7 |
| Capacity of the negative electrode active material (mAh/g) | 500 | 500 | 500 | 500 | 200 | 300 | 1200 | 1500 |
| Post-cycle capacity retention rate | 96.0% | 95.0% | 92.0% | 87.5% | 94.0% | 96.0% | 95.0% | 92.0% |
| Thermal shock resistance time (min) | 89 | 90 | 85 | 59 | 70 | 89 | 90 | 85 |
| Surface temperature of the lithium-ion battery (°C) — Overcharge test | 192.5 | 176 | 190.3 | 247 | 220 | 192.5 | 176 | 235 |
| Surface temperature of the lithium-ion battery (°C) — Nail penetration test | 184.8 | 168.3 | 182.6 | 271 | 212.3 | 184.8 | 168.3 | 239 |
| Surface temperature of the lithium-ion battery (°C) — Impact test | 181.5 | 165 | 179.3 | 249 | 209 | 181.5 | 165 | 201 |

References to "embodiments", "some of the embodiments", "an embodiment", "another example", "examples", "specific examples" or "some examples" in the specification mean the inclusion of specific features, structures, materials, or characteristics described in the embodiment or example in at least one embodiment or example of this application. Therefore, descriptions in various places throughout the specification, such as "in some implementations", "in the embodiments", "in an embodiment", "in another example", "in an example", "in a specific example" or "examples", do not necessarily refer to the same embodiment or example in this application. In addition, specific features, structures, materials, or characteristics herein may be incorporated in any suitable manner into one or more embodiments or examples.

Although illustrative embodiments have been demonstrated and described, those skilled in the art should understand that the above embodiments are not to be construed as limiting this application and that the embodiments may be changed, replaced, and modified without departing from the spirit, principle, and scope of this application.

**Claims**

1.   A negative electrode active material, wherein an interplanar spacing of the negative electrode active material is 0.35 nm to 0.45 nm, the negative electrode active material comprises a metal element, the metal element comprises at least one of gold, silver, platinum, zirconium, zinc, magnesium, calcium, barium, vanadium, iron, or aluminum, and a content percentage of the metal element is 20 ppm to 400 ppm based on a total weight of the negative electrode active material.

2.   The negative electrode active material according to claim 1, wherein the negative electrode active material further comprises a non-metal element, the non-metal element comprises at least one of phosphorus, boron, silicon, arsenic, or selenium, and a content percentage of the non-metal element is 50 ppm to 300 ppm based on the total weight of the negative electrode active material.

3.   The negative electrode active material according to claim 1, wherein a ratio Id/Ig, measured using the Raman spectroscopy, of a peak width at half height Id of a peak at 1345 cm$^{-1}$ to 1355 cm$^{-1}$ of the negative electrode active material to a peak width at half height Ig of a peak at 1595 cm$^{-1}$ to 1605 cm$^{-1}$ is 0.7 to 1.5.

4.   The negative electrode active material according to claim 1, wherein the negative electrode active material comprises pore passages, the pore passages are in a surface of the negative electrode active material, inside the negative electrode active material, or running through the negative electrode active material, or come in any combination thereof, the pore passages account for no more than 50% of a total volume of the negative electrode active material, and inner walls of the pore passages contain the metal element.

5.   The negative electrode active material according to claim 2, wherein the negative electrode active material comprises pore passages, the pore passages are in a surface of the negative electrode active material, inside the negative electrode active material, or running through the negative electrode active material, or come in any combination thereof, the pore passages account for no more than 50% of a total volume of the negative electrode active material, and inner walls of the pore passages contain the non-metal element.

6.   The negative electrode active material according to claim 1, wherein a specific surface area of the negative electrode active material is 2 m$^2$/g to 50 m$^2$/g.

7.   An electrochemical apparatus, comprising a positive electrode, an electrolyte solution, and a negative electrode, wherein the positive electrode comprises a positive electrode active material layer and a positive electrode current collector, the negative electrode comprises a negative electrode active material layer and a negative electrode current collector, and the negative electrode active material layer comprises the negative electrode active material according to any one of claims 1 to 6.

8.   The electrochemical apparatus according to claim 7, wherein a porosity of the negative electrode active material layer is 15% to 45%.

9.   The electrochemical apparatus according to claim 7, wherein a cohesive strength of the negative electrode active material is 5 N/m to 100 N/m.

10.   The electrochemical apparatus according to claim 7, wherein a peel strength between the negative electrode active material layer and the negative electrode current collector is 3 N/m to 40 N/m.

11. The electrochemical apparatus according to claim 7, wherein a weight of the positive electrode active material layer is 1.5 to 15 times the weight of the negative electrode active material layer.

12. The electrochemical apparatus according to claim 7, wherein a capacity of the negative electrode active material is 300 mAh/g to 1200 mAh/g.

13. An electronic apparatus, comprising the electrochemical apparatus according to any one of claims 7 to 12.

FIG. 1

FIG. 2

FIG. 3

## INTERNATIONAL SEARCH REPORT

| International application No. |
|---|
| **PCT/CN2020/081611** |

| **A.** | **CLASSIFICATION OF SUBJECT MATTER** |
|---|---|

H01M 4/587(2010.01)i

According to International Patent Classification (IPC) or to both national classification and IPC

| **B.** | **FIELDS SEARCHED** |
|---|---|

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI: 电池, 负极, 活性材料, 金属, 含量, 孔, battery, negative electrode, active material, metal, content, hole

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | CN 103650220 A (SHOWA DENKO K. K.) 19 March 2014 (2014-03-19) description, paragraphs 2-3, 30-45, 87-115, 169-172, 190 | 1-3, 6-13 |
| Y | CN 103650221 A (SHOWA DENKO K. K.) 19 March 2014 (2014-03-19) description, paragraphs 48-92, 117-156, 180-203 | 1-3, 6-13 |
| Y | CN 104362369 A (DONGGUAN TERUISI BATTERY TECHNOLOGY CO., LTD.) 18 February 2015 (2015-02-18) description, paragraphs 7-17 | 1-3, 6-13 |
| Y | CN 104412425 A (KUREHA CORPORATION et al.) 11 March 2015 (2015-03-11) description, paragraphs 95-115 | 1-3, 6-13 |
| A | KR 20090002410 A (LG CHEMICAL LTD.) 09 January 2009 (2009-01-09) entire document | 1-13 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 December 2020** | **04 January 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/081611**

| Patent document cited in search report | | | Publication date (day/month/year) | Patent family member(s) | | | Publication date (day/month/year) |
|---|---|---|---|---|---|---|---|
| CN | 103650220 | A | 19 March 2014 | JP | 2018166106 | A | 25 October 2018 |
| | | | | US | 2014205532 | A1 | 24 July 2014 |
| | | | | KR | 20140010181 | A | 23 January 2014 |
| | | | | TW | I455880 | B | 11 October 2014 |
| | | | | KR | 101380730 | B1 | 02 April 2014 |
| | | | | JP | 6035223 | B2 | 30 November 2016 |
| | | | | TW | 201336782 | A | 16 September 2013 |
| | | | | JP | 2014053314 | A | 20 March 2014 |
| | | | | JP | 2017033946 | A | 09 February 2017 |
| | | | | JP | 6352362 | B2 | 04 July 2018 |
| | | | | US | 9284192 | B2 | 15 March 2016 |
| | | | | JP | WO2013058347 | A1 | 02 April 2015 |
| | | | | WO | 2013058347 | A1 | 25 April 2013 |
| | | | | CN | 103650220 | B | 07 October 2015 |
| | | | | JP | 5401631 | B2 | 29 January 2014 |
| CN | 103650221 | A | 19 March 2014 | TW | 201336783 | A | 16 September 2013 |
| | | | | JP | 2017033947 | A | 09 February 2017 |
| | | | | JP | 2014029874 | A | 13 February 2014 |
| | | | | US | 9059467 | B2 | 16 June 2015 |
| | | | | US | 2014255292 | A1 | 11 September 2014 |
| | | | | CN | 103650221 | B | 06 April 2016 |
| | | | | JP | 2018166107 | A | 25 October 2018 |
| | | | | JP | 6035224 | B2 | 30 November 2016 |
| | | | | TW | I457278 | B | 21 October 2014 |
| | | | | JP | 6352363 | B2 | 04 July 2018 |
| | | | | WO | 2013058348 | A1 | 25 April 2013 |
| | | | | KR | 20140010180 | A | 23 January 2014 |
| | | | | JP | WO2013058348 | A1 | 02 April 2015 |
| | | | | JP | 5401632 | B2 | 29 January 2014 |
| | | | | KR | 101380259 | B1 | 01 April 2014 |
| CN | 104362369 | A | 18 February 2015 | | None | | |
| CN | 104412425 | A | 11 March 2015 | KR | 20150021045 | A | 27 February 2015 |
| | | | | KR | 101665843 | B1 | 12 October 2016 |
| | | | | CN | 104412425 | B | 21 July 2017 |
| | | | | JP | WO2014038491 | A1 | 08 August 2016 |
| | | | | TW | I641178 | B | 11 November 2018 |
| | | | | US | 2015188137 | A1 | 02 July 2015 |
| | | | | JP | 6345116 | B2 | 20 June 2018 |
| | | | | TW | 201419639 | A | 16 May 2014 |
| | | | | WO | 2014038491 | A1 | 13 March 2014 |
| | | | | EP | 2894702 | A1 | 15 July 2015 |
| KR | 20090002410 | A | 09 January 2009 | KR | 101101152 | B1 | 05 January 2012 |

Form PCT/ISA/210 (patent family annex) (January 2015)